# EUROPÄISCHE PATENTSCHRIFT

(11) **EP 0 560 205 B1**
(45) Veröffentlichungstag und Bekanntmachung des Hinweises auf die Patenterteilung: **24.05.1995**
(21) Anmeldenummer: 93103433.4
(22) Anmeldetag: 04.03.1993
(51) Int. Cl.: F16B 5/00, B21D 39/03, B25H 3/00

(54) **Lagerelement zur starren oder gelenkigen Verbindung von zwei oder mehr Teilen**
Supporting element for the rigid or articulated junction of two or more parts
Elément de support pour la fixation rigide ou articulée de deux ou plusieurs pièces

(30) Priorität: 07.03.1992 DE 4207222
(43) Veröffentlichungstag der Anmeldung: 15.09.1993
(73) Patentinhaber: FIRMA GEORG KNOBLAUCH, D-89537 Giengen (DE)
(72) Erfinder: Rau, Georg, W-7928 Giengen/Hohenmemmingen (DE); Riess, Gerhard, W-8887 Bachhagel-Burghagel (DE); Hitzler, Werner, W-7922 Herbrechtingen (DE)
(74) Vertreter: Dziewior, Joachim, Dipl.-Phys. Dr.

(56) Entgegenhaltungen:
- CH-A- 477 632
- FR-A- 1 118 907
- FR-A- 2 127 706
- GB-A- 831 824
- US-A- 4 813 551

## Beschreibung

Gegenstand des Patents ist ein Lagerelement in einer starren oder gelenkigen Verbindung von zwei oder mehr, im wesentlichen flachen, einander anliegenden Teilen, insbesondere von fest oder gelenkig miteinander zu verbindenden Gehäuse- und Einsatzteilen von Kassetten, die zur Aufbewahrung von Gegenständen, insbesondere von Werkzeugen vorgesehen sind, mit einer in einem Grundteil dieser Teile eingeformten Lagerschale, die einen zylindrisch ausgebildeten Lagerschalenboden aufweist, dessen axial zum Lager gesehen einer Rand am Grundteil angeschlossen ist und dessen axial gegenüberliegender Rand eine parallel zum Grundteil ausgerichtete Stützplatte trägt, wobei der Lagerschalenboden sich über einen Winkel von maximal 180° um die Lagerachse erstreckt und zumindest einer der beiden, sich zwischen dem Grundteil und der Stützplatte erstreckenden Ränder einen Anschlag für den Rand der übrigen Teile bildet und wobei an dem die Lagerschale tragenden Grundteil am Rand der Lagerschale eine zur Lagerachse hin vorstehende Lagerlasche angeschlossen ist, deren freies Ende zur Stützplatte hin abgewinkelt ist und den Lagerzapfen bildet.

Entsprechend dem jeweiligen Anwendungszweck kommt es bei Lagerelementen entscheidend darauf an, daß die Lagerelemente, über die ja in der Regel unabhängig voneinander hergestellte Teile miteinander verbunden werden sollen, auf besonders einfache Weise die erforderliche Montage ermöglichen. Aus der CH-A-477 632 ist zur Verbindung zweier Teile eine Vorrichtung bekannt, bei der am Grundteil parallel zu diesem eine Stützplatte angeordnet ist, die eine Hinterschneidung aufweist, in die das andere Teil mit einer Freischneidung eingesetzt ist und so eine starre Verbindung der zwei Teile herstellt.

Gegenüber diesem Stand der Technik löst der eingangs beschriebene Gegenstand des Patents die der Erfindung zugrunde liegende Aufgabe, ein Lagerelement zu schaffen, das einfach in der Herstellung ist, ferner eine schnelle und problemlose Montage der zu lagernden Teile ermöglicht und es schließlich zuläßt, in einem einzigen Lagerpunkt zugleich sowohl eine starre Lagerung eines Teils als auch die gelenkige Lagerung eines anderen Teils zu verwirklichen.

Der sich durch die Erfindung ergebende Vorteil besteht im wesentlichen darin, daß die im Lagerelement zu lagernden Teile bei ihrer Montage lediglich gemeinsam in den Zwischenraum zwischen dem Grundteil und der Stützplatte eingeschoben werden müssen, worauf das Ende der Lagerlasche in die Aussparungen der Teile hinein abgewinkelt werden kann. Liegen dabei die Teile jeweils beiden stirnseitigen Rändern des Lagerschalenbodens gleichzeitig an, so ist hierdurch eine drehfeste Lagerung erreicht. Anderenfalls ist eine Schwenkbewegung in dem durch den Abstand zu den Rändern gegebenen Maß möglich. Dabei kann insbesondere in einem einzigen Lagerelement gleichzeitig sowohl eine starre als auch eine drehbare Lagerung erfolgen. Vor allen Dingen ist es auch möglich, Teile aus unterschiedlichen Materialien, also z.B. Metalle mit Kunststoffen, zu verbinden.

In bevorzugter Ausführungsform nach der Erfindung ist vorgesehen, daß die Lagerlasche im Bereich des Lagerschalenbodens angeschlossen und aus der Stützplatte freigeschnitten ist.

Eine noch einfachere Ausbildung der Lagerschale wird dann erreicht, wenn der Lagerschalenboden und die Stützplatte aus dem Grundteil freigeschnitten sind, wobei der Lagerschalenboden mit der Stützplatte sickenartig ausgeformt sind.

Um einen möglichst großen Schwenkbereich zu erhalten, kann weiter vorgesehen sein, daß ein gelenkig zu lagerndes Teil an seinem unteren Ende mit Lagerlaschen versehen ist, deren freies Ende eine kreisbogenförmige Lagerfläche bildet, die jeweils in der Lagerschale ruht.

Zur Vereinfachung der Montage ist es schließlich von Vorteil, wenn die Lagerlasche an ihrem freien Ende halbkreisförmig verrundet ist.

Im folgenden wird die Erfindung an einem in der Zeichnung dargestellten Ausführungsbeispiel näher erläutert; es zeigen:

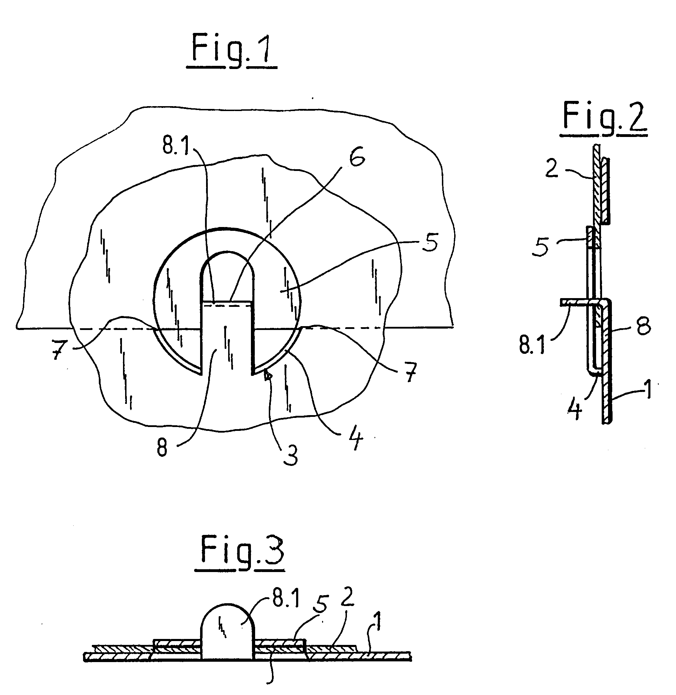

- Fig. 1: den Gegenstand nach der Erfindung in Draufsicht; dargestellt ist eine starre Verbindung,
- Fig. 2: den Gegenstand nach Fig. 1 im Längsschnitt,
- Fig. 3: den Gegenstand nach Fig. 1 im Querschnitt,
- Fig. 4: eine der Figur 1 entsprechende Darstellung; dargestellt ist eine gelenkige Verbindung.

Das in der Zeichnung dargestellte Lagerelement dient zur starren oder gelenkigen Verbindung von zwei oder mehr im wesentlichen flachen Teilen 1,2, die einander anliegen und in der Zeichnung nur abgebrochen wiedergegeben sind. Insbesondere ist das Lagerelement vorgesehen für fest und/oder gelenkig miteinander zu verbindende Gehäuse- und Einsatzteile von Kassetten, die zur Aufbewahrung von Gegenständen, insbesondere von Werkzeugen, vorgesehen sind. Dabei besteht insbesondere auch die Möglichkeit, Teile aus unterschiedlichsten Materialien miteinander zu verbinden.

Im einzelnen besteht das Lagerelement aus einer in einem Grundteil 1 dieser Teile 1,2 eingeformten Lagerschale 3, die einen zylindrisch ausgebildeten Lagerschalenboden 4 aufweist. Der axial zum Lager gesehen eine Rand des Lagerschalenbodens 4 ist am Grundteil 1 angeschlossen. Der axial gegenüberliegende Rand des Lagerschalenbodens 4 trägt eine parallel zum Grundteil 1 ausgerichtete Stützplatte 5, wobei der Lagerschalenboden 4 sich über einen Winkel von maximal 180° um die Lagerachse 6 erstreckt.

Die beiden sich zwischen dem Grundteil 1 und der Stützplatte 5 erstreckenden, den Lagerschalenboden 4 in seiner Längsrichtung begrenzenden Ränder 7 bilden einen Anschlag für den Rand der übrigen Teile 2. Dabei kann das in die Lagerschale 3 eingesetzte Teil 2 so ausgebildet sein, daß es gleichzeitig beiden Rändern 7 des Lagerschalenbodens 4 anliegt, so daß keine Drehbewegung um die Lagerachse 6 möglich, also eine starre Verbindung gegeben ist. Ebenso kann das eingesetzte Teil 2 dagegen so geformt sein, daß eine Schwenkbewegung möglich ist, wobei sich durch dessen entsprechende Gestaltung der maximale Schwenkwinkel festlegen läßt.

An dem die Lagerschale 3 tragenden Grundteil 1 ist am Rand der Lagerschale 3 eine zur Lagerachse 6 hin vorstehende Lagerlasche 8 angeschlossen, deren freies Ende 8.1 zur Stützplatte 5 hin abgewinkelt ist und den Lagerzapfen bildet. Die Abwinklung des Endes 8.1 der Lagerlasche 8 erfolgt, sobald die miteinander zu verbindenden Teile 2 in die Lagerschale 3 eingeschoben sind.

Die Lagerlasche 8 ist im Bereich des Lagerschalenbodens 4 angeschlossen und aus der Stützplatte 5 freigeschnitten. Auch der Lagerschalenboden 4 und die Stützplatte 5 sind aus dem Grundteil 1 freigeschnitten, wobei der Lagerschalenboden 4 mit der Stützplatte 5 sickenartig ausgeformt sind.

Um einen größeren Schwenkbereich für ein gelenkig zu lagerndes Teil 2 zu erreichen, sind an dessen unterem Ende Lagerlaschen 9 vorgesehen. Das freie Ende dieser Lagerlaschen 9 bildet eine kreisbogenförmige Lagerfläche 10, die jeweils in der Lagerschale 3 ruht.

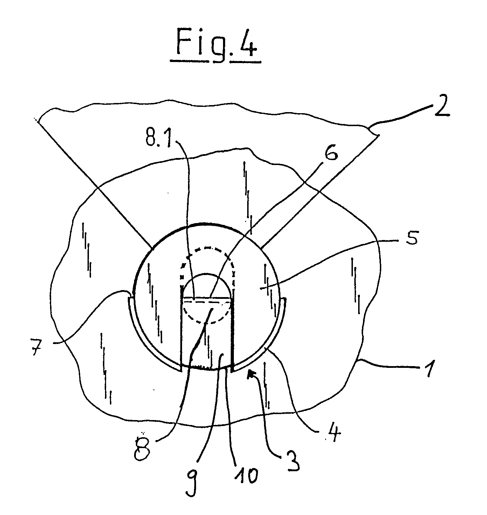

Um die Montage zu erleichtern, ist - wie die Fig. 3 erkennen läßt - die Lagerlasche 8 an ihrem freien Ende 8.1 halbkreisförmig verrundet.

## Patentansprüche

1. Lagerelement zur starren oder gelenkigen Verbindung von zwei oder mehr, im wesentlichen flachen, einander anliegenden Teilen, insbesondere von fest und/oder gelenkig miteinander zu verbindenden Gehäuse- und Einsatzteilen von Kassetten, die zur Aufbewahrung von Gegenständen, insbesondere von Werkzeugen vorgesehen sind, mit einer in einem Grundteil (1) dieser Teile (1,2) eingeformten Lagerschale (3), die einen zylindrisch ausgebildeten Lagerschalenboden (4) aufweist, dessen axial zum Lager gesehen einer Rand am Grundteil (1) angeschlossen ist und dessen axial gegenüberliegender Rand eine parallel zum Grundteil (1) ausgerichtete Stützplatte (5) trägt, wobei der Lagerschalenboden (4) sich über einen Winkel von maximal 180° um die Lagerachse (6) erstreckt und zumindest einer der beiden, sich zwischen dem Grundteil (1) und der Stützplatte (5) erstreckenden Ränder (7) einen Anschlag für den Rand der übrigen Teile (2) bildet und wobei an dem die Lagerschale (3) tragenden Grundteil (1) am Rand der Lagerschale (3) eine zur Lagerachse (6) hin vorstehende Lagerlasche (8) angeschlossen ist, deren freies Ende (8.1) zur Stützplatte (5) hin abgewinkelt ist und den Lagerzapfen bildet.

2. Lagerelement nach Anspruch 1, dadurch gekennzeichnet, daß die Lagerlasche (8) im Bereich des Lagerschalenbodens (4) angeschlossen und aus der Stützplatte (5) freigeschnitten ist.

3. Lagerelement nach Anspruch 1 oder 2, dadurch gekennzeichnet, daß der Lagerschalenboden (4) und die Stützplatte (5) aus dem Grundteil (1) freigeschnitten sind, wobei der Lagerschalenboden (4) mit der Stützplatte (5) sickenartig ausgeformt sind.

4. Lagerelement nach einem der Ansprüche 1 bis 3, dadurch gekennzeichnet, daß ein gelenkig zu lagerndes Teil (2) an seinem unteren Ende mit Lagerlaschen (9) versehen ist, deren freies Ende eine kreisbogenförmige Lagerfläche (10) bildet, die jeweils in der Lagerschale (3) ruht.

5. Lagerelement nach einem der Ansprüche 1 bis 4, dadurch gekennzeichnet, daß die Lagerlasche (8) an ihrem freien Ende (8.1) halbkreisförmig verrundet ist.

## Claims

1. A mounting element for rigidly or pivotably connecting two or more substantially flat portions which bear against each other, in particular casing and insert portions, which are to be fixedly and/or pivotably connected together, of cases which are provided for the storage of articles, in particular tools, having a mounting seat (3) which is formed in a base portion (1) of said portions (1, 2) and which has a mounting seat bottom (4) which is of a cylindrical configuration and whose one edge as viewed axially in relation to the mounting is connected to the base portion (1) and whose axially oppositely disposed edge has a support plate (5) which is oriented parallel with respect to the base portion (1), wherein the mounting seat bottom (4) extends over an angle of a maximum of 180° about the mounting axis (6) and at least one of the two edges (7) which extend between the base portion (1) and the support plate (5) forms an abutment for the edge of the other portions (2), and wherein on the base portion (1) bearing the mounting seat (3) a mounting tongue (8) is connected to the edge of the mounting seat (3) and projects towards the mounting axis (6), the free end (8.1) of the mounting tongue (8) being bent towards the support plate (5) and forming the mounting journal.

2. A mounting element according to claim 1 characterised in that the mounting tongue (8) is connected in the region of the mounting seat bottom (4) and is cut free from the support plate (5).

3. A mounting element according to claim 1 or claim 2 characterised in that the mounting seat bottom (4) and the support plate (5) are cut free from the base portion (1), wherein the mounting seat bottom (4) is shaped out in a fin-like configuration with the support plate (5).

4. A mounting element to one of claims 1 to 3 characterised in that a portion (2) which is to be pivotably mounted is provided at its lower end with mounting tongues (9) whose free ends form mounting surfaces (10) which are in the shape of a circular arc and which respectively rest in the mounting seat (3).

5. A mounting element according to one of claims 1 to 4 characterised in that the mounting tongue (8) is rounded in a semicircular shape at its free end (8.1).

## Revendications

1. Elément de palier pour la liaison fixe ou articulée de deux ou plus de parties essentiellement planes disposées l'uns contre l'autre, en particulier d'un boîtier et d'inserts de cassettes à relier ensemble de façon fixe et/ou articulée, lesdites cassettes étant prévues pour le stockage d'objets, en particulier d'outils, comportant une coquille de palier (3) aménagée dans un fond (1) de ces parties (1,2), qui présente un fond de coquille de palier (4) de forme cylindrique, dont un bord vu axialement par rapport au palier est fixé au fond (1) et dont le bord axialement opposé porte une plaque d'appui (5) s'étendant parallèlement par rapport au fond (1), le fond de coquille de palier (4) s'étendant sur un angle maximal de 180° autour de l'axe de palier (6) et au moins un des deux bords (7) s'étendant entre le fond (1) et la plaque d'appui (5) formant une butée pour le bord des éléments restants (2), et une portée de palier (8) qui s'étend au bord de la coquille de palier (3) vers l'axe de palier (6) étant fixée au fond (1) portant la coquille de palier (3), l'extrémité libre (8.1) de cette portée étant inclinée vers la plaque d'appui (5) et formant le tourillon de palier.

2. Elément de palier selon la revendication 1, caractérisé, en ce que la portée de palier (8) est fixée dans la zone du fond de coquille de palier (4) et est découpée à partir de la plaque de support (5).

3. Elément de palier selon la revendication 1 ou 2, caractérisé en ce que le fond de coquille de palier (4) et la plaque d'appui (5) sont découpés à partir du fond (1), le fond de coquille de palier (4) étant réalisé sous forme de moulure avec la plaque d'appui (5).

4. Elément de palier selon l'une des revendications 1 à 3, caractérisé en ce qu'une pièce (2) à stocker de façon articulée est pourvue à son extrémité inférieure de portées de palier (9), dont l'extrémité libre forme une surface de palier en forme d'arc de cercle (10), qui repose de chaque côté dans la coquille de palier (3).

5. Elément de palier selon l'une des revendications 1 à 4, caractérisé en ce que la portée de palier (8) est arrondie à son extrémité libre (8.1) en forme de demi-cercle.
